# EUROPEAN PATENT APPLICATION

(11) **EP 2 859 797 A1**
(43) Date of publication of application: **15.04.2015**
(21) Application number: 12878378.4
(22) Date of filing: 29.06.2012
(51) Int. Cl.: A23K 1/16, A23K 1/18

(54) **ADDITIVE COMPOSITION FOR SHRIMP FEED AND A METHOD FOR PRODUCING THE SAME**

(30) Priority: 07.06.2012 KR 20120061162
(71) Applicant: J&B Bio Inc., Seongnam-si, Geyonggi-do 462-736 (KR); Jung, Jong Bae, Seoul 134-749 (KR)
(72) Inventor: JUNG, Jong Bae, Seoul 134-749 (KR)
(74) Representative: Von Kreisler Selting Werner - Partnerschaft von Patentanwälten und Rechtsanwälten mbB
(86) International application number: PCT/KR2012/005174
(87) International publication number: WO 2013/183805

(57) **Abstract**

The present invention relates to an additive composition for shrimp feed and a method for producing the same, and more particularly to an additive composition for shrimp feed and a method for producing the same which both increases the survival and the growth rate of aquacultural shrimp and prevents seawater pollution. The present invention discloses a method for producing an additive composition for shrimp feed, which includes the steps of: mixing microorganisms such as saccharomyces, bacillus subtilis and lactobacillus, natural products such as red ginseng, tangle, agar, salicornia herbacea L, peucedanum japonicum thunberg, sea lettuce, dandelion, atractylodes chinensis, dropwort and Puerariae Radix, and fermented fruits such as apple, orange, mandarin, pineapple and melon; and extracting the ferment from the mixture, which provides an antiviral effect, increases immunity, improves digestion, promotes growth, decomposes remnant feed, etc.

## Description

### Technical Field

The present invention relates to an additive composition for shrimp feed and a method for preparing the same. More particularly, the present invention relates to an additive composition for shrimp feed that increases survival and growth rates of cultured shrimp and by which the contamination of sea water can be prevented, and a method for producing the same.

### Background Art

The Korean National Fisheries Research and Development Institute issued "Research Report on Productivity Enhancement of Shrimp Aquaculture", disclosing that in 2003, the mortality rate of the aquacultural shrimp across the Republic of Korea amounted to 80.3 %.

Although the cultivation area of shrimp has gradually increased, the production of aquacultured shrimp has not increased because of their extremely low survival rate. To improve the survival rate, drugs, agents or chemicals against pathogens such as WSSV (white spot syndrome virus) has been used, but caused pollution.

Currently, the aquaculture of shrimp is considered to be a main cause of environmental pollution. The sea water used in shrimp aquaculture is contaminated with feed residue, and acts as a mass-scale environmental pollutant, destroying the ecosystem of the littoral sea near the farm and thus making other fisheries difficult in management.

To improve survival and growth rates of aquacultured shrimp, plans should be made for preventing the incidence of diseases and viruses, potentiating immunity, enhancing digestion, supplying nutrients, and promoting growth. Currently, fishermen cultivate shrimp by feeding with several varieties of drugs, chemicals, or pharmaceutical agents. To date, materials for potentiating immunity (e.g., vitamin C, microorganism agents, fermented extracts of herbs, etc.) have been developed, but there have yet been no explicit materials accounting for antiviral activity, digestion enhancement, growth promotion, and degradation of residual feed.

In this disclosure, the present inventor proposes a method for producing an additive composition for shrimp feed, comprising: mixing microorganisms such as saccharomyces, bacillus subtilis and lactobacillus, natural products such as red ginseng, tangle, agar, salicornia herbacea L, peucedanum japonicum thunberg, sea lettuce, dandelion, atractylodes chinensis, dropwort and Puerariae Radix, and fermented fruits such as apple, orange, mandarin, pineapple and melon; and extracting a ferment from the mixture, whereby antiviral activity, immunity potentiation, digestion enhancement, growth promotion, and degradation of residual feed can be brought about.

Saccharomyces is a genus in the kingdom of fungi that includes many species of yeast. They are unicellular and saprophytic fungi in which hyphae are absent. Neither photosysthesis nor motility is found in the microorganism. One example is *Saccharomyces cerevisiae,* which is used in making bread, bear, and wine. Many of them are able to produce ethanol and carbon dioxide by fermenting sugar. Saccharomyces itself is used as a cheap lipid and protein source in a feed. They are rich in vitamin B, with vitamin D found in some of them. Also, they find applications in the pharmaceutical industry (source from NAVER Encyclopedia).

Bacillus subtilis (hay bacillus) is classified as a spore-forming aerobe, with no toxicity. It is widely distributed in nature, including dry grass, soil, sewage, air, etc. Capable of enzymatically curding milk, saccharifying starch, and degrading lipids, Bacillus subtilis is extensively utilized in industrial fields. It optimally grows at a pH of 7 ∼ 8.5 with a temperature set to be 37 ∼ 40°C (source from NAVER Encyclopedia).

Lactic acid bacteria are a generic name of bacteria that produce lactic acid as the major metabolic end-product of carbohydrate fermentation, with the concomitant generation of energy. Suitable for the definition of lactic acid bacteria are Lactobacillus spp., Lactococcus spp., Leuconostoc spp., Pediococcus spp., and Bifidobacterium spp. Each of them grows well in an hypoxic environment, with the production of lactic acid from various sugars. They are resistant to acid in many cases, and exhibit complex auxotrophy, requiring various amino acids and vitamins as well as sugars. Some cannot grow in the absence of trace nutrients (source from NAVER Encyclopedia).

In red ginseng, like white ginseng, glycosides, panacen, polyacetylene compounds, nitrogen-containing components, flavonoid, vitamin (B complex), trace elements, enzymes, antioxidants, organic acids, and amino acids. Red ginseng induces sedative and stimulatory activities on the central nervous system, and influences the circulatory system so as to prevent hypertension or arteriosclerosis. In addition, red ginseng is found to exert various effects, including hematopoiesis, hypoglycemic activity, hepatoprotection, sexual arousal through stimulation of the endocrine system, anti-inflammatory and anti-tumor activity, radiation protection, and dermal protection. Importantly, red ginseng was scientifically proven to have adaptogenic effects, that is, to increase protective activity against various fistula diseases and stresses and to allow for easy adaptation to surrounding environments (source from: NAVER Encyclopedia).

Whole dandelion exhibits choleretic activity. Also, it promotes the secretion of gastric juice. In the herbal medicine, dandelion is prescribed for the therapy of portal dropsy because of its diuretic activity. In a folk medicine, it used as an antitussive and mucolytic agent for the treatment of coughs and tuberculosis, as a diuretic agent for the treatment of nephrolithiasis, and as an anti-inflammatory agent for the treatment of colitis, and gastric ulcers (source from: Components and Use of Medicinal Herbs, 1999. 6. Ilwolbooks, page 750).

In Cnidium officinale, essential oils and coumarin are found. It exhibits sedative activity. When the central nervous system does not function normally, this herb is prescribed. In addition, it is found to have hypotensive activity, acting as a peripheral vasodilator (source from: Components and Use of Medicinal Herbs, 1999. 6. Ilwolbooks, page 529).

An essential oil from Angelica root is found to have sedative activity as proven in animal experiments, and to exert an anticonvulsive effect even on an isolated stomach. A decoction of Angelica root is proven to have sedative and anticonvulsive activity. For arthritis, an aqueous solution of essential oil from the root is used as an anti-inflammatory analgesic agent (source from: Components and Use of Medicinal Herbs, 1999. 6. Ilwolbooks, page 516).

Flavor components and bitter-taste materials of tangerine peel exhibit aromatic stomachic activity by promote secretion of gastric juice and raising an appetite. Its flavonoids include hesperidin, known as vitamin P, and decrease the permeability of capillary (source from: Components and Use of Medicinal Herbs, 1999. 6. Ilwolbooks, page 433).

Isoflavones of Puerariae Radix act as a spasmolytic, mainly attributable to the counter action of papaverine against acetylcholine. A material that strongly induces the contraction of smooth muscles is found in Puerariae Radix (source from: Components and Use of Medicinal Herbs, 1999. 6. Ilwolbooks, page 404).

Even a small amount of an essential oil from Atractylodes chinensis shows sedative activity. Also, the essential oil has potent anti-fungal activity (source from: Components and Use of Medicinal Herbs, 1999. 6. Ilwolbooks, page 719).

Salicornia herbacea L. also called glasswork, is rich in choline, betain, dietary fiber, and mineral, and is used for hepatic detoxification, treatment of fatty liver, and immunity potentiation (source from Wikipedia, Korean version).

An alcohol extract of Peucedanum japonicum thunberg root has analgesic activity, and has long been used to treat stoke (source from: Components and Use of Medicinal Herbs, 1999. 6. Ilwolbooks, page 534).

Whole dropwort shows choleretic, anti-cholesterolemic, and hemostatic activities. Further, it stimulates appetite and decreases blood bilirubin levels. A component isolated from whole dropwort is found to suppress the degranulation of mast cells, and exhibits anti-allergenic activity (source from: Components and Use of Medicinal Herbs, 1999. 6. Ilwolbooks, page 531).

Tangle is rich in various pigments such as carotenes, xanthophylls, and cholrophyl, carbohydrates such as mannite, laminarin, etc., and alginic acid, a component of cell walls. In addition, iodide, vitamin B2, and amino acids such as glutamic acid are found in tangle. Generally, the composition of tangle, although varying depending on the type of tangle, comprises 16 % of water, 7 % of proteins, 1.5 % of lipids, 49 % of carbohydrates, and 26.5 % of inorganic salts. Cellulose amounts to 20 % of the carbohydrate, with the remaining accounted for by polysaccharides such as alginic acid and laminarin. Particularly rich in minerals, such as iodide, potassium and calcium, tangle may be used as a mineral source. Lamin, which isa protein showing hypertensive activity, is also found in tangle (source from: NAVER Encyclopedia).

Agar is a gelatinous substance, predominantly found between cells of algae, amounting to 10 ∼ 20 % of the weight of algae. Agar is helpful in stimulating intestinal peristalsis, and attracts keen attention as a diet food because of low calories. It is also used as a thickener in ice cream and jam (source from: NAVER Encyclopedia).

Sea lettuce is an edible green algae that has a rich scent and distinctive taste. Sea lettuce is a food source for humans in Korea and Japan. It contains 20 ∼ 30 % of proteins, 10 ∼ 15 % of minerals, and 500 ∼ 1,000 IU of vitamins, with abundant alkaline elements (source from: NAVER Encyclopedia).

Apple is an alkaline fruit that is composed mainly of carbohydrates. It is abundant in vitamin C and mineral such as potassium, sodium, calcium, etc., but poor in proteins and lipids. Vitamin C is helpful for skin care, and potassium acts to pump sodium ions out of cells, thus being useful in the prevention and treatment of hypertension. Dietary fiber abundantly found in apples acts as a bulking agent that absorbs water as it moves through the digestive system, easing defecation. Also, apples stimulate the secretion of gastric juice, helping digestion, and increasing iron uptake. Apples are purported to relieve stress, thus being applicable to the treatment of insomnia, anemia, and headache (source from: NAVER Encyclopedia).

Oranges consist of 7 - 11 % sugar, and 0.7 ∼ 1.2 % acids, tasting freshly sour and sweet. Of 100 g of the flesh, vitamin C amounts to 40 ∼ 60 mg. It is also rich in dietary fiber and vitamin A. Thus, oranges are considered to be good for cold prevention, fatigue recovery, and skin care. They are also helpful in the prevention of adult diseases since they are lipids and cholesterol-free (source from: NAVER Encyclopedia).

The tangerine is a fruit that has an abundance of vitamin A and C. As with oranges, the tangerine is considered helpful in the prevention of colds. It is also useful for preventing arteriosclerosis and treating digestive disorders because of its high content of vitamin E (source from: NAVER Encyclopedia).

Pineapple has a high sugar content and is rich in vitamins A, C and B. Its sprouts are used as a food material in currie whereas the other part of the leaf is applied to the preparation of vinegar or used as an animal feed. The fruit is helpful for treating menstrual irregularity, dyspepsia, and beriberi, for eradicating parasites, and for rehabilitating from nervous fatigue. Its ferment is used for the treatment of edema, and functions as an antibiotic. Its fibrin and proteins reduce cardiac paralysis (source from: NAVER Encyclopedia).

Melon is composed mainly of sugars such as sucrose, glucose, fructose, etc., with a certain level of vitamins B1, B2, and C, carotene and potassium. Exhibiting diuretic activity, melon is useful in the treatment of edema, hypertension, and nephropathy. Also, it is useful for quenching thirst thanks to its antipyretic activity (searched by Googling, What is Melon? Jeon, Dong-Myoung, Outside Professor, Dong-A University, Korea).

Enzymes are organic compounds that act as catalysts for chemical reactions in vivo. There are various enzymes in cells of all organisms including animals and plants, and their lives are maintained by the catalytic activities of enzymes. Enzymes are distributed throughout all cells and are involved in chemical reactions in all organisms. The approximately 60 trillion cells constituting the human body are replaced as they age with new cells by the metabolic processes for which enzymes are responsible. In addition, enzymes cover a broad spectrum of physiological functions including anti-inflammatory and anti-bacterial activities, detoxification, blood purification, digestion, absorption, degradation, discharge, etc. More than 2,000 kinds of enzymes are implicated in a great number of biochemical reactions within the body (source from: NAVER Encyclopedia).

### [Document of Related Art]

### [Patent Document]

[Document 1] Korean Patent Application Unexamined Publication No. 2001-0071331 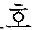 "ADDITIVES FOR CRUSTACEAN OR FISH FEEDS AND FEEDS "(2001. 7. 28.)
[Document 2] Korean Patent No. 0855357 "Production Method of Functional Feed Additives for Fish Culturing and Feed Additives from This Method "(2008. 8. 25)
[Document 3] Novel Microorganism Bacillus subtilis CJ1021 and Fish Feed Additive Containing the same

### Disclosure

### Technical Problem

### Technical Solution

### Advantageous Effects

### Mode for Invention

### [EXAMPLE]

### 1. First Process

A mixture of 1 kg of dried red ginseng, 1.5 kg of dandelion, 1.5 kg of Cnidium officinale, 1.5 kg of Angelica, 1.5 kg of tangerine peel, 1.5 kg of Puerariae Radix, and 1.5 kg of Atractylodes chinensis, all in a dry state, was immersed in 100 L of water, and decocted at 95°C or less for 12 ∼ 20 hrs.

When cooled to 25°C∼35°C, 1 L of the decoction was inoculated with 0.1 g of a Saccharomyces strain {1x10 CFU(Colony Forming Unit)/g}, and incubated for 3 ∼ 4 days. To 1 L of the resulting culture, then, 0.1 g of a Bacillus subtilis culture (1x10 CFU/g) was inoculated, followed by incubation for 3 ∼ 4 days. The fermented mixture of red ginseng, dandelion, Cnidium officinale, Angelica, tangerine peel, Puerariae Radix, and Atractylodes chinensis was placed in a non-woven fabric and pressed using a hydraulic apparatus to separate liquid from fibrous matter.

Again, 1 L of the liquid obtained after fermentation of a mixture of red ginseng, dandelion, Cnidium officinale, Angelica, tangerine peel, Puerariae Radix, and Atractylodes chinensis was inoculated with 0.1 g of Lactococcus lactis (1x10 CFU/g), and incubated for 3 ∼ 4 days.

The resulting culture was lyophilized at -30°C ∼ -80°C for 60 ∼ 72 hrs, pulverized, and sieved through a 100 mesh to give a lactic acid bacteria-containing nutrient powder.

### 2. Second Process

A mixture of 4 kg of tangle, 4 kg of agar, and 3 kg of Salicornia herbacea L was immersed in 100 L of water, and decocted for 8 hrs, followed by filtering the decoction of tangle, agar and Salicornia herbacea L through a non-woven fabric to separate liquid from the fibrous matter of tangle, agar, and Salicornia herbacea L. The decocted liquid was further filtered through 200 mesh at 40°C. At less than 40°C, the liquid might be hardened.

In this process, the liquid nutrient prior to the lyophilization of the first process was stored at 0°C∼2°C, and added in an amount of 6.7 L ∼ 10 L, together with 30 cc of a salt-fermented shrimp liquid (a decoction of salt-fermented shrimp), 30 cc of a salt-fermented anchovy liquid (a decoction of salt-fermented anchovy) and 5 L of the above-prepared decocted liquid of tangle, agar, and Salicornia herbacea L, to 100 L of water.

Eight copies of the medium thus obtained were maintained at 25°C∼35°C, with a pH adjusted to 5.5-6.2. Eight species of lactic acid bacteria Lactococcus lactis, Lactobacillus casei, Lactobacillus plantarum, Leuconostoc citreum, Lactobacillus brevis, Leuconostoc masenteroides, Pediococcus pentosaceus, and Bifidobacterium asteroides were respectively inoculated to the media and incubated for 3-4 days. The strains were purchased from the KCCM, and cultured.

Each of the strain cultures was vacuum concentrated by 50 % in a vacuum concentrator. The concentrates or the cultures themselves were lyophilized at -30°C ∼ -80°C for 60 ∼ 72 hrs, pulverized, and filtered through a sieve of 100 ∼ 200 mesh to afford lactic acid bacterium powders.

### 3. Third Process

A total of about 40 kg of a mixture of Salicornia herbacea L, Peucedanum japonicum thunberg, sea lettuce, dandelion, Atractylodes chinensis, dropwort, and Puerariae Radix, each weighing 5.71kg, was added to 100 L of water, and supplemented with a total of 60 kg of a combination of: apple, orange, tangerine, pineapple, and melon, each weighing 12 kg, followed by decocting for 6 ∼ 8 hrs at 95°C or less to prepare about 200 L of a medium.

This medium was incubated for 2 hrs, and decocted again at 95°C or less before separation into liquid and fibrous matter through a non-woven fabric using a hydraulic apparatus.

The separated liquid sterilized for 30 min under UV light, and inoculated with each culture of Saccharomyces, Bacillus subtilis, Bifidobacterium asteroides, and Lactobacillus casei in an amount of 0.1 ∼ 0.2 g/liter, and fermented for 4 ∼ 6 days. The media were maintained at a pH of 5.5 - 6.2.

The liquid after fermentation was an enzyme-containing solution. It was concentrated by 50 % in a vacuum concentrator, and subjected to hydrolysis. The resulting enzyme solution was lyophilized at -30°C ∼ -80°C for 60 - 72 hrs, pulverized, and then filtered through a sieve of 100 ∼ 200 mesh to give enzyme powder.

### 4. Fourth Process

The 8 lactic acid bacteria powders of Lactococcus lactis, Lactobacillus casei, Lactobacillus plantarum, Leuconostoc citreum, Lactobacillus brevis, Leuconostoc masenteroides, Pediococcus pentosaceus, and Bifidobacterium asteroids, prepared in Second process, were mixed at equal weight ratios. This lactic acid bacteria power was mixed with the nutrient powder prepared from red ginseng, dandelion, Cnidium officinale, Angelica, Puerariae Radix, tangerine peel, and Atractylodes chinensis in First process, and the enzyme powder prepared from apple, orange, pineapple, melon, Salicornia herbacea L, Peucedanum japonicum thunberg, sea lettuce, dandelion, Atractylodes chinensis, dropwort, and Puerariae Radix in Third process. The resulting mixture contained 50-65 weight % of the lactic acid bacteria powder, 17-25 weight % of the nutrient powder, and 17-25 weight % of the enzyme powder.

### [EXPERIMENTAL EXAMPLE]

### 1. Method

To apply the present invention to the cultivation of shrimp, an experiment was performed under the following condition in two cultivation sites on the outskirts of Kalimantan Balikpapan, Indonesia.

| Cultivati on Site | Cultivati on Time | Cultivati on Area | Initial No. of Shrimp |
|---|---|---|---|
| A | 31 days | 1,662 m² (1/6 ha) | 166,000 |
| B | 60 days | 3,300 m² (1/3 ha) | 330,000 |

The lactic acid bacteria powder (1x10 CFU/g) was mixed at a weight ratio of 6:4 with the enzyme powder. This mixture was packed in an amount of 6 g/pack.

On the first day, 10 packs were fed to the shrimp. From the second day, the mixture was sprayed at a dose of 5 packs/day for 3 days to a total of 15 packs. That is, a total of 25 packs, each weighing 6 g, of the mixture were added as a dilution in 1 liter water per pack to cultivation tanks for 4 days. During this period, no other feed was given.

The lactic acid bacteria powder, the enzyme powder, and the nutrient powder were mixed at a weight ratio of 6:2:2, and the resulting mixture was packed in an amount of 8 g. 8 Grams of this mixture powder (lactic acid bacteria, enzyme powder, and nutrient powder) was diluted in 1 liter of water, and used from the fifth day.

A feed for shrimp was provided from CP, Indonesia. A dilution of the mixture powder weighing 8 g in 1 liter of water was divided into three aliquots and stored at 2°C∼6°C when shrimp were fed three times a day. To sufficiently absorb the lactic acid bacteria, enzyme and nutrient into the feed, the dilution was sprayed over the feed 1 hour before shrimp were fed. Because of the presence of lactic acid bacteria and nutrients in the mixture powder pack of 8 g, it was refrigerated to avoid putrefaction at room temperature. For easy use, the mixture was stored in aliquots.

Separately from the above-mentioned procedure, feeds and contaminants remaining in the cultivation tanks were removed. For cultivation site A, 2 packs of the lactic acid bacteria and enzyme powder mixture, each weighing 6 g, were dissolved in 2 liters of water and added twice during the cultivation time of 31 days (on days 15 and 25 after young shrimp were introduced). In cultivation site B, 5 packs of the lactic acid bacteria and enzyme powder mixture, each weighing 6 g, were dissolved in 5 liters of water and added five times during the cultivation time of 60 days (on days 15, 25, 35, 45 and 55 after young shrimp were introduced). This mixture powder, weighing 6g, comprised 60-80 weight % of the lactic acid bacteria powder, and 20-40 weight % of the enzyme powder.

### *2. Result

### 2.1. Survival Rate and Production of Cultured Shrimp

| Culti vation Site | Culti vation Time | Culti vation Area | I nitial No. of Shrimp | Su rvival rate | Prod uction |
|---|---|---|---|---|---|
| A | 31 days | 1,662 m² (1/6 ha) | 1 66,000 | 98 % | 0.52 tons |
| B | 60 days | 3,300 m² (1/3 ha) | 3 30,000 | 96 % | 2.8 tons |

During the period of cultivation, no diseases caused by, for example, WSSV, pancreatic virus, etc. were generated in the cultured shrimp. For 60 days, shrimp were produced in an amount of 2.8 tons at a survival rate of 96% in 1/3 ha (3,300 m²) (which corresponds to 8.4 tons in 1 ha).

According to the report "Research Report on Productivity Enhancement of Shrimp Aquaculture" of the Korean National Fisheries Research and Development Institute, native adult shrimp were infected with WSSV at a rate of 21.0 % and with pancreatic virus at a rate of 33.2 % in 2003, which has been increased about four times for 2 years. It also discloses that the aquacultural shrimp across the Republic of Korea were produced in an amount of 2,727 tons at a modality rate of 80.3 %, with a productivity of 1.07 tons/ha. Considering this report, the aquaculture of the present invention that produces 8.4 tons/ha at a survival rate of 96 % for 60 days is very efficient.

### 2.2. Degradation of remaining feed

In the present invention, the lactic acid powder degraded remaining feed as lactic acid bacteria grow while digestive enzymes such as amylases, lipases, proteases, and cellulases in the enzyme powder degrade lipids, proteins and carbohydrates in the remaining feed.

To examine the degradation of remaining feed, 40 liters of the aqua culture was taken in a tank and added with 50 g of shrimp feed. Once a week, 5 liters were withdrawn from the tank to which 5 liters of water was then supplemented. This procedure was repeated for 40 days. To simulate the condition of the cultivation sites, 6 g of the lactic acid bacteria and enzyme powder mixture was diluted in 1 liter of water, and added four times in an amount of 10 cc each time on days 5, 15, 25 and 25 after introduction of the feed. The remaining feed were observed to be degraded to 25% ∼ 30% after 7 ∼ 15 days, to 70%∼80% after 20 ∼ 30 days, and to 90 % or higher after 40 days. Almost no remaining feed was observed after 40 days.

## Claims

1. A method for producing a shrimp feed, comprising:
a first process of inoculating three different bacterial strains into an extract of red ginseng and a medicinal herb sequentially, culturing the strains to form a nutrient culture, and lyophilizing the nutrient culture to give a nutrient powder;
a second process of preparing a medium with the nutrient liquid of the first process, a salt-fermented shrimp liquid, a salt-fermented anchovy liquid, and a decoction of tangle, agar, and salicornia herbacea L., culturing 8 different lactic acid bacterial species in each medium, lyophilizing the cultures, and pulverizing the lyophilizates to give respective lactic acid bacteria powders,
a third process of decocting sea lettuce, a medicinal herb, and a fruit in water to give a medium, inoculating the medium with the strain culture, fermenting the medium to give an enzyme liquid, lyophilizing the enzyme liquid, and pulverizing the lyophilizate to give an enzyme powder; and
a fourth process of combining the 8 lactic acid bacteria powders of the second process with each other, and then with the nutrient powder of the first process and the enzyme powder of the third process.

2. The method of claim 1, wherein the medicinal herb of the first process comprises at least one selected from among dandelion, Cnidium officinale, Angelica, tangerine peel, Puerariae Radix, and Atractylodes chinensis.

3. The method of claim 1, wherein the three different bacterial strains of the first process are inoculated and cultured one by one in the following order: Scharomyces, Bacillus subtilis, and Lactococcus lactis.

4. The method of claim 1, wherein the 8 different lactic acid bacteria strains of the second process include: Lactococcus lactis, Lactobacillus casei, Lactobacillus plantarum, Leuconostoc citreum, Lactobacillus brevis, Leuconostoc masenteroides, Pediococcus pentosaceus, and Bifidobacterium asteroides.

5. The method of claim 1, wherein the medicinal herb of the third process is at least one selected from among: Salicornia herbacea L, Peucedanum japonicum thunberg, dandelion, Atractylodes chinensis, dropwort, and Puerariae Radix.

6. The method of claim 1, wherein the fruit of the third process is at least one selected from among apple, orange, tangerine, pineapple, and melon.

7. The method of claim 1, wherein the strain culture of the third process includes a Scharomyces culture, a Bacillus subtilis culture, Bifidobacterium asteroides culture, and a Lactobacillus casei culture.

8. The method of claim 1, wherein 50-65 weight % of the lactic acid bacteria powder, 17.5-25 weight % of the nutrient powder, and 17.5-25 weight % of the enzyme powder are mixed in the fourth process.

9. A shrimp feed, produced using the method of any of claims 1 to 8.
